# EUROPÄISCHE PATENTSCHRIFT

(11) **EP 0 755 773 B1**
(45) Veröffentlichungstag und Bekanntmachung des Hinweises auf die Patenterteilung: **04.06.2003**
(21) Anmeldenummer: 96111952.6
(22) Anmeldetag: 24.07.1996
(51) Int. Cl.: B29C 53/08, B29C 53/82, B29D 23/00

(54) **Verfahren zur Herstellung von Krümmerschläuchen**
Method for making bent pipes
Procédé pour la fabrication de tubes coudés

(30) Priorität: 25.07.1995 DE 19527182
(43) Veröffentlichungstag der Anmeldung: 29.01.1997
(73) Patentinhaber: VERITAS GUMMIWERKE AG, 63571 Gelnhausen (DE)
(72) Erfinder: Ludwig, Hans-Josef, Dipl.-Ing., 63571 Gelnhausen-Meerholz (DE)
(74) Vertreter: Grünecker, Kinkeldey, Stockmair & Schwanhäusser Anwaltssozietät

(56) Entgegenhaltungen:
- FR-A- 2 328 565
- FR-A- 2 518 014
- FR-A- 2 687 949
- US-A- 4 218 420
- US-A- 4 242 296
- US-A- 4 882 101

## Beschreibung

Die vorliegende Erfindung betrifft ein Verfahren zur Herstellung von Krümmerschläuchen.

Im Stand der Technik sind verschiedenste Verfahren zur Herstellung von vulkanisierten Schläuchen bekannt. Dabei richtet sich ein besonderes Augenmerk auf die Herstellung geformter vulkanisierter Schläuche, die z.B. zwei Teile einer Maschine miteinander verbinden und aufgrund der Anwesenheit anderer Bauelemnte, die eine Verbindung mit einem geraden Rohr verhindern, abhängig vom jeweiligen Verwendungszweck an einer oder mehreren Stellen ihrer Länge gekrümmt oder gebogen werden. Ein Beispiel für solche Rohre sind z.B. Krümmerschläuche.

Krümmerschläuche unterliegen den verschiedensten Anforderungen hinsichtlich ihrer Ausgestaltung. So muß die Krümmung der Rohre bleibend und endgültig entsprechend einem vorher festgelegten Winkel und Krümmungsradius eingearbeitet werden. Ferner sollte das Rohr über die gesamte Länge einen gleichbleibenden Radius aufweisen.

Herkömmlicherweise werden alle Schlauchaufbauten zumindestens bis zu einem Innendurchmesser bis ca. 15 mm aus Toleranzgründen auf einem flexiblen Dorn gefertigt. Dies geschieht in folgendem Arbeitsschritten: Extrudieren der Innenlage, der sogenannten Seele, auf einen flexiblen Dorn aus Gummi, wobei zur Vermeidung von Verklebungen der Dorn mit einem Trennmittel beaufschlagt wird. Nach dem Umflechten der Seele mit dem Druckträger und Aufextrudieren der Schlauchdecke, muß der Dorn wieder aus dem noch nicht vulkanisierten Schlauch entfernt werden. Dies ist ein schwieriger und senibler Vorgang, da bei unsachgemäßer Handhabung der noch nicht vulkanisierte Schlauch beschädigt werden kann.

Um diesem noch nicht vulkanisierten Schlauch bzw. dem Halbfabrikat die gewünschte Form zu verleihen, wird es auf einen gekrümmten Stahldorn geschoben. Da das Halbfabrikat an dem Stahl gut haftet, werden Stahldorn und Halbfabrikat mit einem Gleitmittel benetzt, um das Aufschieben des Rohlings auf den Dorn und das Abziehen des vulkanisierten Schlauches zu ermöglichen. In dem verformten Zustand, d.h. während das Halbfabrikat auf den gekrümmten Stahldorn aufgeschoben ist, wird der Schlauchrohling in einem Autoklaven zum fertigen Schlauch vulkanisiert. Nach diesem Prozeß wird der Schlauch vom Stahldorn entfernt.

Dieses herkömmliche Verfahren zur Herstellung von Schläuchen beinhaltet verschiedene kritische und nachteilige Schritte, sowie Verfahrensparameter. Hierzu zählt unter anderem das Entfernen des noch unvulkanisierten Schlauches von dem Gummidorn, sowie das Entfernen des bereits vulkanisierten Schlauchs von dem Stahldorn. Als weiterer erschwerender Punkt sollte die hohe Schadstoffbelastung des Wassers durch das Gleitmittel genannt werden.

Zur Lösung dieser Probleme gibt im Stand der Technik bereits verschiedene Ansätze. So ist z.B. aus der DE-GM74 37 638 eine Form zum Herstellen von Krümmerschläuchen aus Gummi oder gummiähnlichen Werkstoffen bekannt. Dabei wird der Schlauchrohling in eine Form eingelegt, welche aus mehreren aufeinandergeschichteten Platten besteht, die im zusammengefügten Zustand den Formhohlraum für den Schlauch bilden. Die Schläuche werden folglich ohne Einsatz eines Stahlformdorns in die gewünschte Form gebracht. Dieses Verfahren hat jedoch den Nachteil, daß der Dorn, wie schon oben erwähnt, im rohen Zustand des Schlauches ausgedornt werden muß. Darüber hinaus sind nicht alle Radien ohne Dorn herstellbar, bei den sehr engen Radien, die heute fast immer üblich sind, kommt es zu Abflachungen oder gar zu Knickstellen.

Aus der DE-PS 39 27 577 ist desweiteren ein Verfahren bekannt, bei welchem ein Dorn aus einer Memorylegierung in den wiederum bereits entdornten Schlauchrohling eingeschoben werden muß. Der aus dem Memory-Metall geformte Dorn soll sowohl das Aufziehen des unvulkanisierten Schlauches, wie auch das Entdornen nach Beendigung des Vulkanisiervorganges erleichtern. Dies wird über die eingesetzte Memorylegierung bzw. Formgedächtnislegierung ermöglicht, die lediglich zur Vulkanisierung die eigentliche Funktionsgeometrie annimmt. Der Formschlauch wird folglich auf den in gerader, gestreckter Form vorliegenden Dom aufgezogen, so daß der Gleitmittelbedarf reduziert werden kann. Nach der Vulkanisierung liegt der Formdom wiederum in gestreckter Form vor, so daß auch das Abziehen erleichtert wird.

Nach wie vor muß jedoch auch hier der Schlauch zunächst auf einen Gummidom extrudiert werden und dieser aus dem noch nicht vulkanisierten Schlauch entfernt werden. Darüber hinaus sind die Memorylegierungen relativ teuer, so daß die Produktionskosten steigen. Des weiteren ist die Hochtemperaturform des Formdoms festgelegt, so daß es nicht möglich ist auf Änderungen der Formgebung des Formschlauches ohne weiteres zu reagieren.

In der FR 268 79 49 ist ein Verfahren zum Herstellen eines gekrümmten Schlauches aus einem Polymer mit Hilfe eines innenliegenden, plastisch verformbaren Doms gezeigt. Dabei weist der Dom einen Kem aus weichem Stahl oder Kunststoff auf. Nachdem der Dom mit verformbarem Kem und einer Polymerhülle koextrudiert wurde, wird ein Schlauch auf den Dom aufgezogen oder aufextrudiert. Danach wird der Schlauch zusammen mit dem innenliegenden Dom in einzelne Stücke geschnitten, gekrümmt und die Form schließlich durch Vulkanisation, beispielsweise bei einem Schlauch aus Elastomer, oder durch Abkühlen, beispielsweise bei Schläuchen aus Polymeren oder Thermoplasten, festgelegt. Der Dom wird aus dem geradegestreckten Schlauch entfernt, der Kem und die Hülle des Doms werden getrennt, die Hülle gemahlen und dem ersten Verfahrensschritt wieder zugeführt. Durch den plastischen Kem des Doms wird eine Vulkanisation in einer Negativform überflüssig gemacht. Dieses Verfahren hat den Nachteil, daß der Aufbau des Doms kompliziert und damit teuer ist. Außerdem bereitet die Trennung von Kem und Hülle des Doms erhebliche Schwierigkeiten.

Beim Verfahren der US 488 21 01 wird ein gekrümmter Schlauch aus Polymethyl-Penten gefertigt. Hier wird ebenfalls zunächst ein langer Kunststoffdom extrudiert und dann ein Gummischlauch auf die Oberfläche des langen Kunststoffdoms extrudiert. Zusätzlich können weitere Schichten, beispielsweise eine Gewebeverstärkung, aufgeformt werden. Im nächsten Schritt wird der Schlauch mit innenliegenden, langem Kunststoffdom vulkanisiert, so daß ein langer Gummischlauch geformt wird. Anschließend wird der lange Gummischlauch zusammen mit dem Dom in Stücke vorbestimmter Länge geschnitten. Dann werden die Dome aus dem geschnittenen Schlauch entfernt und gemahlen, um so Ausgangsmaterial für die Extrusion der Dome im ersten Schritt zu erhalten. In diesem Verfahren ist eine Herstellung von gekrümmten Schläuchen nicht möglich, da sich der Vulkanisationsschritt direkt an dem Extrusionsschritt anschließt und somit der kontinuierlich zugeführte Schlauchrohling in Durchlaufbädem vulkanisiert werden muß.

Schließlich beschreibt die US 424 22 96 ein Verfahren, bei dem beliebig gekrümmte Schläuche hergestellt werden, indem Dome vorbestimmter Länge der Reihe nach einen Extruder zugeführt werden. Zwischen den Domen liegen jeweils Abstandshalter. Nachdem der Schlauch auf die Dome und Abstandshalter aufextrudiert wurde, wird der Schlauch an den Stellen der Abstandshalter geschnitten, wobei die Abstandshalter hierbei durchtrennt werden. Dann wird der Schlauch mit innenliegendem Dom in eine vorbestimmte Kurvenform gebracht und vulkanisiert. Der Dom wird anschließend mit Druckluft ausgeblasen und dem Extruder im ersten Verfahrensschritt wieder zugeführt. Nachteilig bei diesem Verfahren ist, daß jeweils nur Dome vorbestimmter Länge verwendet werden können. Zudem ist der Aufbau mit Abstandshaltem zwischen den einzelnen Domen aufwendig und teuer.

JP-A-3199034 beschreibt ein kontinuierliches Verfahren zum Herstellen eines gekrümmten Schlauchs. Zunächst wird eine innere Gummischicht auf einen Dorn aufextrudiert. Anschließend werden eine Verstärkungsschicht auf die innere Gummischicht und eine äußere Gummischicht auf die Verstärkungsschicht aufgebracht. Die äußere Gummischicht wird nachfolgend durch eine thermoplastische Kunststoffschicht abgedeckt. Der so hergestellte, unvulkanisierte, rohrförmige Schlauch wird einem Biege- und Schneidvorgang unterworfen und in einer Form vulkanisiert. Nach dem Vulkanisieren wird der Schlauch einem Gefriervorgang unterworfen, um die Kunststoffschicht abzutrennen.

Der Erfindung liegt daher die Aufgabe zu Grunde, ein Verfahren zur Herstellung von Krümmerschläuchen zur Verfügung zu stellen, mit welchem die aus dem Stand der Technik bekannten Nachteile überwunden werden und welches kostengünstig durchgeführt werden kann.

Diese Aufgabe wird erfindungsgemäß durch ein Verfahren zur Herstellung von Krümmerschläuchen gemäβ Anspruch 1 gelöst.

Erfindungsgemäß wird der Schlauchrohling, in dessen Inneren sich der Kunststoffdorn befindet, mit Endmaßhülsen und Halteelemente in der Negativform Fixiert. Die erfindungsgemäße verfahren gewährleistet die Maßgenauigkeit der Endform und gleichzeitig ein Vermeiden von Druckstellen.

Erfindungsgemäß ist desweiteren vorgesehen, daß der Dorn nach dem Entfernen aus dem Schlauch granuliert wird. Desweiteren hat es als vorteilhaft erwiesen, wenn aus dem Dorngranulat ein neuer Dorn geformt.

Da der Kunststoffdorn nach der Entfernung aus dem Schlauch granuliert wird, ist es möglich, diese Kunststoffmaterialien ohne Probleme weiter zu verarbeiten. Dabei ist es bevorzugt, aus diesem Granulat einen neuen Kunststoffdorn herzustellen und so die Wertschöpfungskette zu schließen.

Die Materialien des Kunststoffdorns können folglich vollständig recyceln und als neuen Kunststoffdorn weiterverwertet werden. Das erfindungsgemäße Verfahren erfüllt somit ein heutzutage bestehendes Grunderfordernis, daß insbesondere zu immer stärkeren Auflagen an die Industrie führt. Im Hinblick auf den Stand der Technik wird das Bedürfnis Rohstoffe zu sparen immer wichtiger und zusätzlich die zu beanspruchende Kapazität auf Müllbergen zu verringern. Gleichzeitig soll die bei der Müllverbrennung auftretende Luftschadstofferhöhung verringert werden.

Da bei dem erfindungsgemäßen Verfahren kein Gleitmittel eingesetzt wird, kann der Kunststoffdorn direkt ohne aufwendige Reinigungsverfahrensschritte granuliert werden und in diesem Zustand weiterverarbeitenden Schritten zugeführt werden. Dies führt wiederum zu einer Kostensenkung und Verfahrensverkürzung.

Hierbei ist die Wiederverwertbarkeit des Kunststoffdornes als neuer Kunststoffdorn besonders vorteilhaft. Zum einen läßt sich der bereits verwendete Kunststoffdorn ohne komplizierte chemische Aufbereitungsschritte verarbeiten, die u.a. weiteren Stoffeinsatz erfordern würden. Gleichzeitig werden die Energiekosten niedrig gehalten und die Rohstoffkosten können gesenkt werden. Ferner kann die notwendige Lagerhaltung verringert werden. Zusammenfassend läßt sich festhalten, das sich die Wirtschaftlichkeit erhöht, da man nicht länger vom Einkauf der Rohstoffe abhängig ist und die laufenden Kosten verringert werden.

Gemäß einer bevorzugten Ausführungsform der Erfindung wird der Kunststoffdorn aus einem Polyolefin hergestellt. Als besonders vorteilhaft hat es sich dabei erwiesen, wenn der Kunststoffdorn aus Poly(4-methyl-1-penten), bekannt z.B. unter dem Warennamen TPX, hergestellt wird.

Diese Materialien haben sich für den Einsatz als Kunststoffdorn als besonders geeignet erwiesen, da die Haftung zwischen dem Gummischlauch und dem Kunststoffdorn gering ist, so daß auf das Gleitmittel verzichtet werden kann. Darüberhinaus erfüllen diese Materialien jedoch auch weitere an den Kunststoffdorn gestellte Vorraussetzungen. So sind diese Materialien resistent gegen Lösungsmittel, Weichmacher und Vulkanisationsprodukte und lassen sich recyceln und mehrmals wiederverwenden. Gleichzeitig ist das Poly(4-methyl-1-penten) bei den für die Vulkanisierung notwendigen Temperaturen von ca. 180°C formstabil und kann daher eingesetzt werden, ohne daß sich das Material nachteilig verändert. Aber auch die Anfordungen an die Biegbarkeit des Dornes beim Einlegen des Halbfabrikates in die Negativform werden von diesem Material erfüllt. Poly(4-methyl-1-penten) weist eine solche Flexibilität auf, daß auch kleine Krümmungsradien verwirklicht werden können.

Das erfindungsgemäße Verfahren eignet sich nicht nur zur Herstellung von einschichtigen Gummischläuchen, sondern es können Schläuche mit beliebig vielen Schichten hergestellt werden, ohne daß das Verfahren durch die zusätzlichen Schichten gravierend verändert werden muß. Vorzugsweise werden bei mehrschichtigen Schläuchen die einzelnen Schichten nacheinander auf den Dorn extrudiert.

Darüber hinaus gewährleistet das erfindungsgemäße Verfahren eine große Flexibilität im Hinblick auf die Endform des vulkanisierten Schlauches. Durch das Bereitstellen verschiedensten Negativformen kann die gewünschte Endform des Schlauches einfach bestimmt werden, verschiedenste dreidimensionale Gestaltungen des Schlauches werden ermöglicht, ohne das aufwendige Änderungen des Verfahrens notwendig werden.

Im folgenden wird die Erfindung anhand eines bevorzugten Ausführungsbeispieles unter Bezugnahme auf die beigefügten Zeichnungen beschrieben.

Es zeigt:
Figur 1 einen Schlauch, teilweise im Schnitt, der auf einen Kunststoffdorn extrudiert wurde,

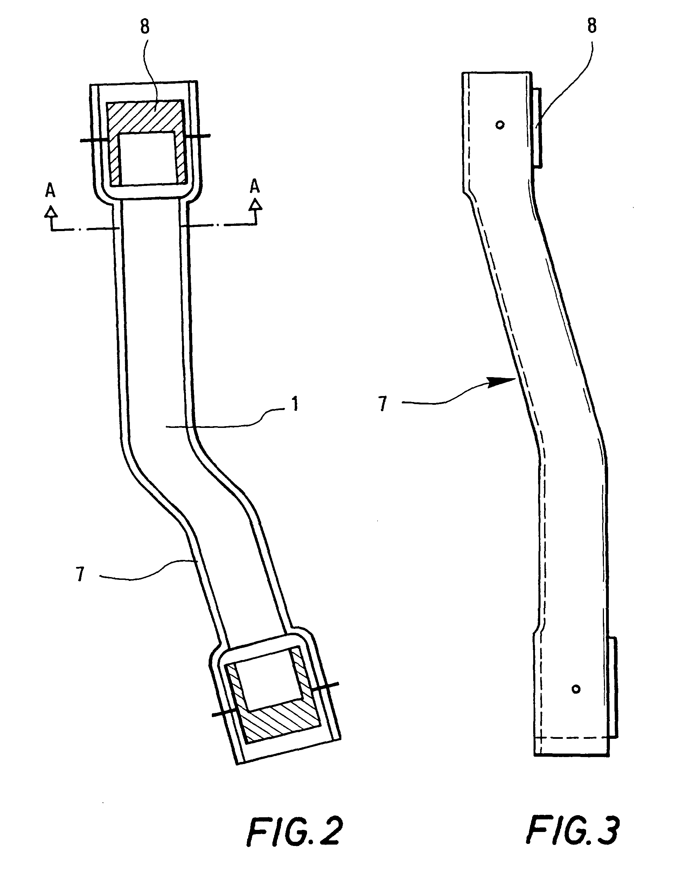

Figur 2 eine Prinzipskizze einer Negativform in Aufsicht, mit eingeführten Schlauchrohling,
Figur 3 eine Seitenansicht der Negativform aus Figur 2, und
Figur 4 einen Querschnitt der in Figur 2 dargestellten Negativform entlang der Linie A-A.

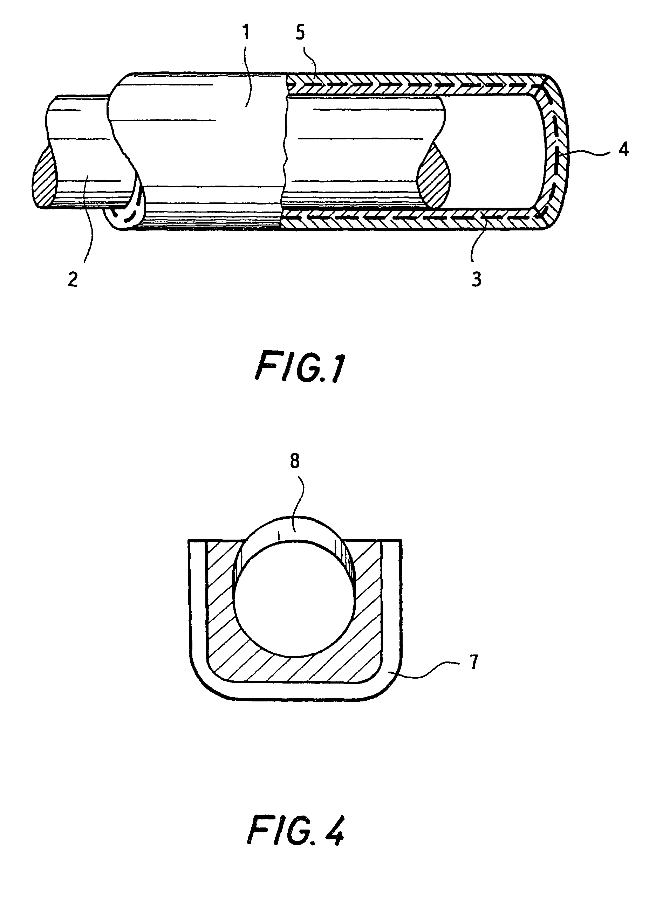

In Figur 1 ist ein Schlauchrohling 1, der auf einen Kunststoffdorn extrudiert wurde, dargestellt. Wie teilweise im Schnitt gezeigt, handelt es sich im vorliegenden Fall um einen Gummischlauch, der aus mehreren Lagen gefertigt wurde. In direkten Kontakt mit dem Kunststoffdorn 2 ist eine erste Schicht 3 des Schlauches 1 aufgebracht. Die Schicht 3, auch Seele genannt, besteht aus einer bestimmten Gummimischung, z.B. einer Mischung auf der Basis von NBR (Nitrilkautschuk). Auf der Seele ist ein Druckträgermaterial angeordnet, welches aus einem Fasermaterial bestehen kann, z.B. Zellwolle. Die abschließende Schicht 5 auch Decke genannt, besteht wiederrum aus einer bestimmten Gummimischung, die sich jedoch von der Mischung der Seele unterscheiden kann, nur beispielhaft wird hier z.B. eine Mischung auf der Basis von CR (Chloroprenkautschuk) genannt.

Nachdem der Schlauchrohling 1 auf dem Kunststoffdorn 2 extrudiert wurde, wird der Schlauchrohling zusammen mit dem Kunststoffdorn 2 auf eine vorbestimmte, gewünschte Länge geschnitten.

Die einzelnen Schlauchabschnitte, mit im Inneren befindlichen auf gleiche Länge geschnittenen Kunststoffdorn 2 werden anschließend in Negativformen 7 eingelegt. Die Negativform 7 ist in der gewünschten Endform des Schlauches ausgebildet. Da sich der Kunststoffdorn beliebig biegen läßt, ist es möglich den Schlauchrohling in die Negativform entsprechend zu verlegen.

Der Schlauchrohling wird mit Endmaßhülsen 8 in der Negativform fixiert, so daß Maßgenauigkeit gewährleistet werden kann.

Anschließend wird der Schlauchrohling zusammen mit dem Kunststoffdorn in der Negativform vulkanisiert.

Nach der Vulkanisation wird der Krümmerschlauch aus der Negativform entnommen. Da die Haftung zwischen Gummi und Kunststoffdorn gering ist, sowie Dorn mit Schlauch ausgerichtet werden können, kann der Dorn ohne großen Kraftaufwand mechanisch oder Pneumatisch entnommen werden.

Da kein Gleitmittel verwendet werden muß, können die Teile direkt am nächsten Punkt der Wertschöpfungskette weiterverarbeitet werden.

Der Dorn wird regranulisiert und wieder verwendet.

## Patentansprüche

1. Verfahren zur Herstellung von Krümmerschläuchen, bei dem zunächst ein Schlauchrohling (1) auf einen Kunststoffdorn (2) extrudiert und daraufhin zusammen mit dem im Inneren des Schlauchrohlings (1) befindlichen Kunststoffdorn (2) auf eine vorbestimmte Länge geschnitten wird, anschließend der Schlauchrohling (1) mit dem im Inneren befindlichen Kunststoffdorn (2) vulkanisiert wird und schließlich der Kunststoffdorn (2) aus dem Schlauch entfernt und granuliert wird, wobei der Schlauchrohling (1) nach dem Schneiden zusammen mit dem im Inneren befindlichen Kunststoffdorn (2) in eine Negativform (7), die die gewünschte Endform der Krümmerschläuche aufweist, gelegt und in dieser mit dem im Inneren befindlichen Kunststoffdorn (2) vulkanisiert wird und der Schlauchrohling mit Endmaßhülsen und Halteelementen in der Negativform fixiert ist, so daß Maßgenauigkeit gewährleistet ist.

2. Verfahren durch Herstellung von Krümmerschläuchen nach Anspruch 1, **dadurch gekennzeichnet, daß** aus dem granulierten Dorn einer neuer Kunststoffdorn (2) geformt wird.

3. Verfahren zur Herstellung von Krümmerschläuchen nach einem der Ansprüche 1 bis 2, **dadurch gekennzeichnet, daß** der Kunststoffdorn (2) aus einem Polyelifin hergestellt wird.

4. Verfahren zur Herstellung von Krümmerschläuchen nach einem der Ansprüche 1 bis 3, **dadurch gekennzeichnet, daß** der Kunststoffdorn (2) aus Poly (4-methyl-1-penten) (PMP) hergestellt wird.

5. Verfahren zur Herstellung von Krümmerschläuchen nach einem der Ansprüche 1 bis 4, **dadurch gekennzeichnet, daß** der Schlauchrohling (1) aus mindestens einer Schicht (3, 4, 5) gebildet wird.

## Claims

1. A method for manufacturing curved hose in which an uncured hose assembly (1) is first extruded on to a plastics mandrel (2) and is then cut to a predetermined length together with the plastics mandrel (2) located inside the uncured hose assembly (1), the uncured hose assembly (1) with the plastics mandrel (2) located therein is then vulcanised and finally the plastics mandrel (2) is removed from the hose and granulated, **wherein** the uncured hose assembly (1) together with the plastics mandrel (2) located therein is placed after cutting into a negative mould (7) having the desired final form of the curved hose assemblies and is vulcanised with the plastics mandrel (2) located therein in said negative mould (7) and the uncured hose assembly with final-dimension sleeves and retaining elements is fixed in the negative mould so that dimensional accuracy is ensured.

2. A method for manufacturing curved hose according to Claim 1, **characterised in that** a new plastics mandrel (2) is moulded from the granulated mandrel.

3. A method for manufacturing curved hose according to either of claims 1 to 2, **characterised in that** the plastics mandrel (2) is manufactured from a polyolefin.

4. A method for manufacturing curved hose according to any one of claims 1 to 3, **characterised in that** the plastics mandrel (2) is manufactured from poly(4-methyl-1-pentene) (PMP).

5. A method for manufacturing curved hose according to any one of claims 1 to 4, **characterised in that** the uncured hose assembly (1) is formed from at least one layer (3, 4, 5).

## Revendications

1. Procédé pour fabriquer des tuyaux coudés, selon lequel on commence par extruder une ébauche de tuyau (1) sur un mandrin en matière plastique (2), puis on la coupe, avec le mandrin en matière plastique (2) placé à l'intérieur, à une longueur prédéfinie, après quoi on la vulcanise, avec le mandrin en matière plastique (2) placé à l'intérieur, et on enlève finalement le mandrin (2) du tuyau pour le transformer en granulat, étant précisé qu'après avoir été coupée, l'ébauche de tuyau (1) est placée, avec le mandrin en matière plastique (2) placé à l'intérieur, dans un moule négatif (7) qui présente la forme définitive souhaitée des tuyaux coudés, et est vulcanisée dans le moule (7) avec ledit mandrin (2) placé à l'intérieur de l'ébauche de tuyau, et que l'ébauche de tuyau est fixée dans le moule négatif à l'aide de manchons formant cales-étalons et d'éléments de fixation, de sorte que la précision dimensionnelle est garantie.

2. Procédé pour fabriquer des tuyaux coudés selon la revendication 1, **caractérisé en ce qu'**on forme un nouveau mandrin en matière plastique (2) à partir du mandrin transformé en granulat.

3. Procédé pour fabriquer des tuyaux coudés selon les revendications 1 ou 2, **caractérisé en ce qu'**on fabrique le mandrin en matière plastique (2) à partir d'une polyoléfine.

4. Procédé pour fabriquer des tuyaux coudés selon l'une des revendications 1 à 3, **caractérisé en ce qu'**on fabrique le mandrin en matière plastique (2) à partir de poly(4-méthyl-1-pentène) (PMP).

5. Procédé pour fabriquer des tuyaux coudés selon l'une des revendications 1 à 4, **caractérisé en ce qu'**on forme l'ébauche de tuyau (1) à partir d'au moins une couche (3, 4, 5).
